# EUROPÄISCHE PATENTSCHRIFT

(11) **EP 0 860 409 B1**
(45) Veröffentlichungstag und Bekanntmachung des Hinweises auf die Patenterteilung: **27.06.2001**
(21) Anmeldenummer: 98101732.0
(22) Anmeldetag: 30.01.1998
(51) Int. Cl.: C05F 17/02, B65G 65/20

(54) **Einrichtung zum Umsetzen von auf einem Kompostierfeld gelagertem, verrottbarem Gut**
Device for shifting and turning of compost piles
Dispositif pour retourner des tas matériaux à composter

(30) Priorität: 19.02.1997 AT 27597
(43) Veröffentlichungstag der Anmeldung: 26.08.1998
(73) Patentinhaber: VKW-Vogel & Müller GmbH, 6901 Bregenz (AT)
(72) Erfinder: VKW-Vogel & Müller GmbH, 6901 Bregenz (AT)
(74) Vertreter: Hefel, Herbert, Dipl.-Ing.

(56) Entgegenhaltungen:
- WO-A-95/21141
- AT-B- 386 821
- DE-C- 19 508 616
- DE-C- 19 510 225
- US-A- 5 187 097

## Beschreibung

Die Erfindung bezieht sich auf eine Einrichtung zum Umsetzen von auf einem Kompostierfeld gelagertem, verrottbarem Gut zur Kompostierung mit den Merkmalen des Oberbegriffes des Patentanspruches 1.

Aus AT 386 821 B und der EP 250 617 B1 ist eine Einrichtung dieser Art bekannt. Sie besteht aus einer auf Schienen verfahrbaren Brücke und einer auf der Brücke verfahrbaren Laufkatze, welche Grab- und Förderräder und ein Förderband trägt. Es sind hier zwei Grab- und Förderräder mit Abstand zueinander und gleichachsig angeordnet, welche in Achsrichtung gegeneinander gerichtete Austrittsöffnungen aufweisen. In den Bereich zwischen den beiden Grab- und Förderrädern greift ein Förderband ein. Grab- und Förderräder wie auch das Förderband sind höhenverstellbar an der auf der Brücke verfahrbaren Laufkatze gehalten. Diese Einrichtung arbeitet mit einer vorgegebenen und konstanten Umsetzweite, die durch die konstruktive Baulänge der Einrichtung gegeben ist. Durch die fortschreitende Verrottung schwindet das Gut und nimmt ein geringeres Volumen an. Dieser Schwund führt zu einer geringeren Mietenhöhe, so daß das zur Verfügung stehende Kompostierfeld mit fortschreitender Verrottung ungenügend genutzt wird. Es wurde daher die vorstehend erwähnte Einrichtung dahingehend weiterentwickelt, daß der Abstand zwischen Abbaustelle und Abwurfstelle beim Umsetzen in einem vorgegebenen Ausmaß frei wählbar ist, um den Rotteschwund auszugleichen, d. h., die zusammengesackte Altmiete zu einer neuen Miete mit einer Höhe wie zum Beginn umzusetzen. Eine Einrichtung dieser Art ist in WO 90/11263 = EP 393 378 sowie in der US-PS 5 187 097 gezeigt und beschrieben. An der Abwurfkante der Abbauvorrichtung bzw. unterhalb derselben sind hier mehrere übereinander liegende, horizontale Förderbänder angeordnet, von welchen zumindest das zuunterst liegende Förderband längsverschiebbar ist, wodurch sich der Überlappungsgrad dieser übereinander liegenden Förderbänder ändert und damit der Abstand zwischen der Abbaustelle und der Abwurfstelle, wobei dieser Abstand im Ausmaß der konstruktiven Vorgaben veränderbar ist. Da bei dieser vorbekannten Konstruktion die Abbaustelle und die Abwurfstelle in verschiedenen, seitlich gegeneinander versetzten Vertikalebenen liegen, werden beim Umsetzen die Mieten immer mehr seitlich verschoben, wodurch die zur Verfügung stehende Fläche des Kompostierfeldes wiederum nur unzureichend nutzbar ist.

Ausgehend von diesem Stand der Technik zielt die Erfindung darauf ab, diese vorbekannte Konstruktion dahingehend weiterzuentwickeln und zu verbessern, um den seitlichen Versatz der Mieten zu vermeiden und um die zur Verfügung stehende Fläche, das Kompostierfeld, möglichst optimal zu nutzen. Zur Lösung dieser komplexen Aufgabe schlägt die Erfindung jene Maßnahmen vor, die Inhalt und Gegenstand des kennzeichnenden Teiles des Patentanspruches 1 sind. Zweckmäßige Ausgestaltungen der Erfindung sind in den Unteransprüchen festgehalten.

Um die Erfindung zu veranschaulichen, wird sie anhand der Zeichnung an einem Ausführungsbeispiel näher erläutert. Es zeigen:
- Fig. 1: eine Draufsicht auf ein Kompostierfeld mit einer Abbauvorrichtung;

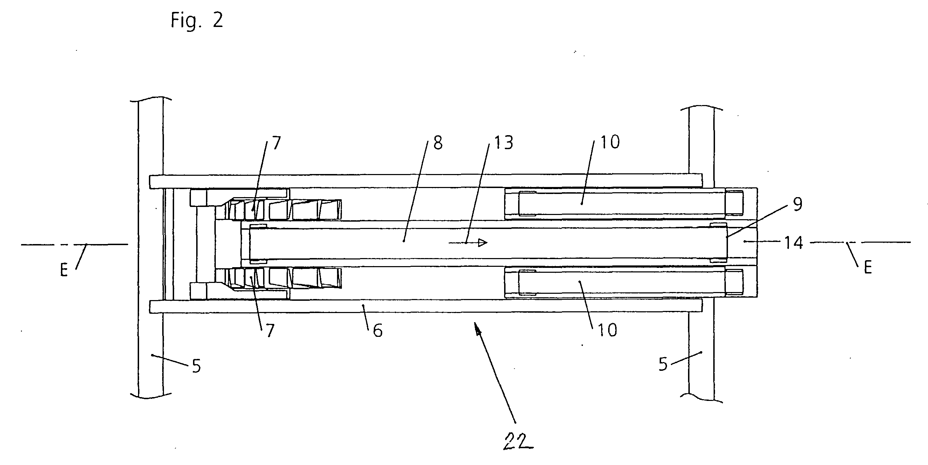

- Fig. 2: die Draufsicht auf die Abbauvorrichtung in einem gegenüber Fig. 1 vergrößerten Maßstab und
- Fig. 3: die Abbauvorrichtung in Seitensicht;
- die Fig. 4 und 5: die Stirnansicht der Abbauvorrichtung - Blickrichtung Pfeil A in Fig. 3 mit jeweils unterschiedlicher Stellung der Leitvorrichtung.

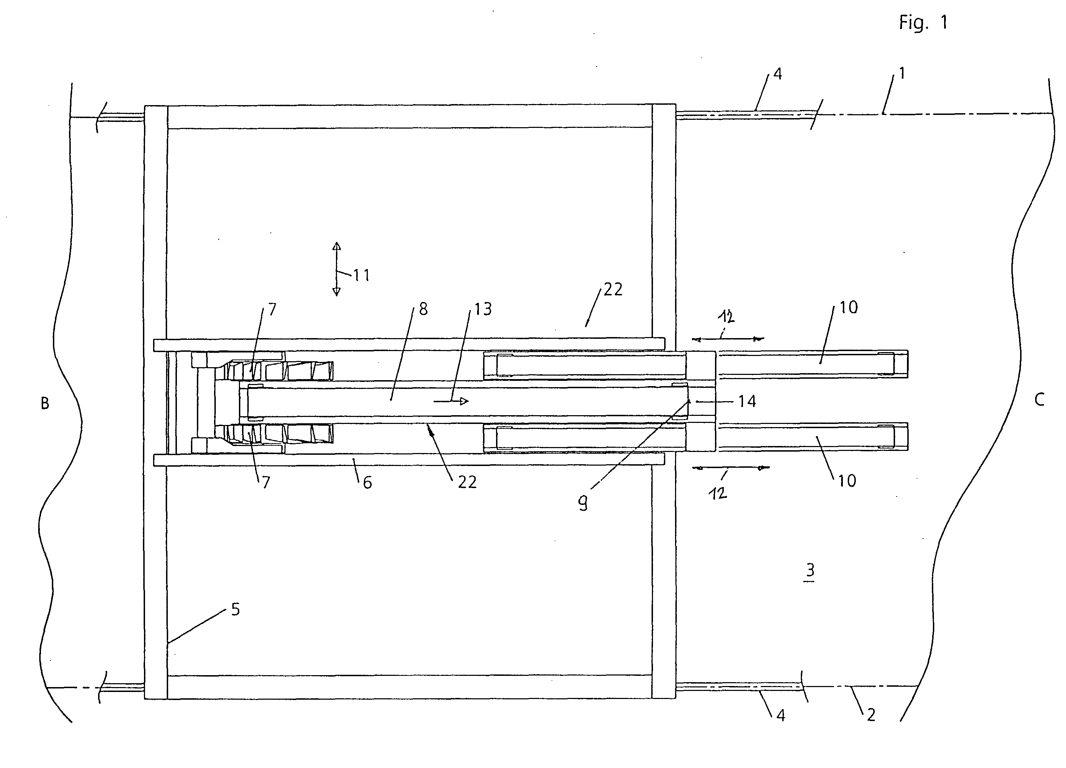

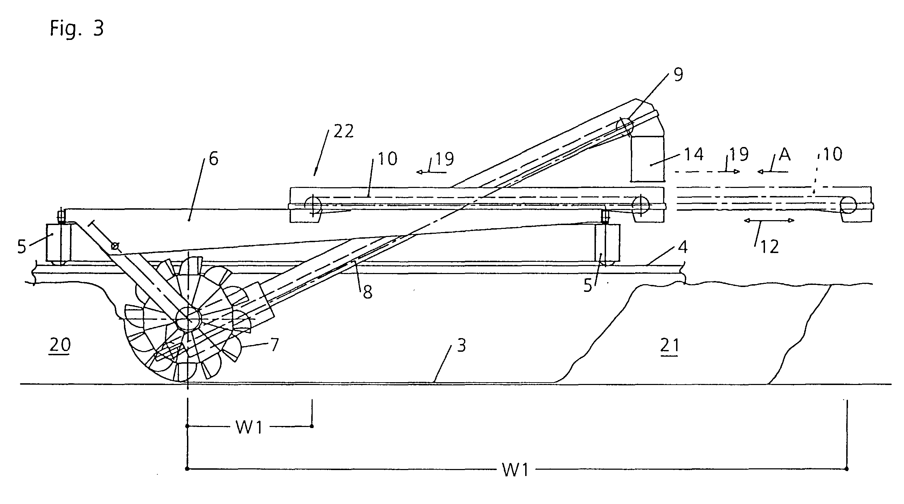

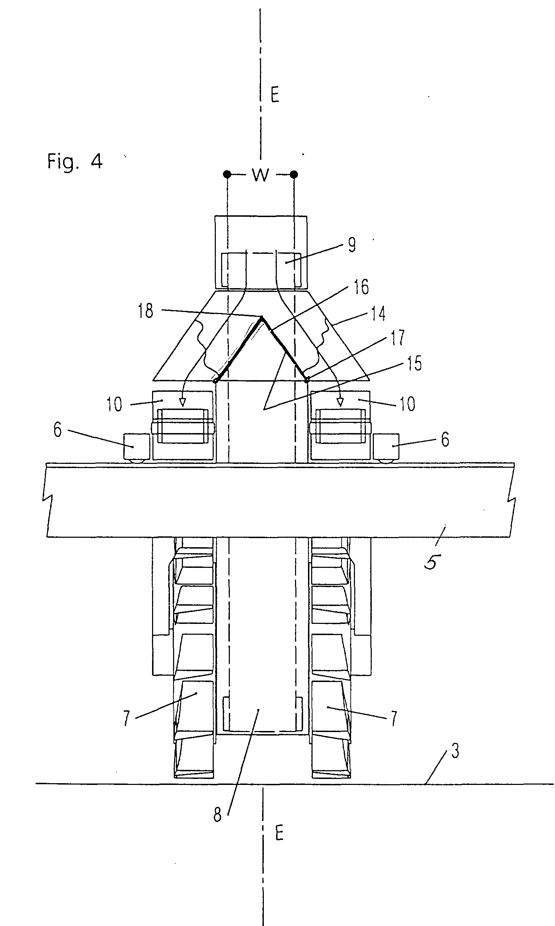

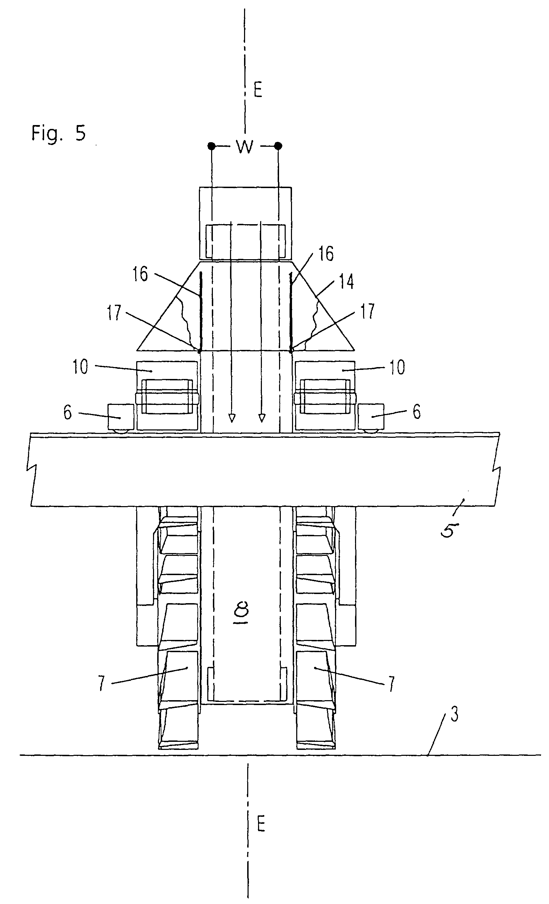

Entlang der Längsseiten 1 und 2 eines Kompostierfeldes 3 - die Eingangsseite ist mit B, die Ausgangsseite mit C bezeichnet - sind Kranbahnen 4 vorgesehen, entlang diesen Kranbahnen 4 ist eine Kranbrücke 5 in Längsrichtung des Kompostierfeldes 3 verfahrbar, auf welchem ein Laufwagen 6 verschiebbar gelagert ist (Pfeil 11). In bzw. an diesem Laufwagen 6 sind zwei Grab- und Förderräder 7 mit horizontaler, fluchtender Achslage und mit horizontalem Abstand voneinander drehbar gelagert. Zwischen diesen beiden Grab- und Förderrädern 7 liegt ein ansteigender Schrägförderer, der als Förderband 8 ausgebildet ist, dessen oberes Ende eine Abwurfkante 9 bildet. Diese Grab- und Förderräder 7 und der erwähnte Schrägförderer bilden die Abbauvorrichtung 22. Zu beiden Seiten des schräg angeordneten Förderbandes 8 ist je ein Horizontalförderer 10 vorgesehen, wobei diese Horizontalförderer 10 zweckmäßigerweise ebenfalls als Förderbänder ausgebildet sind. Diese Horizontalförderer 10 besitzen Antriebsmotoren mit umschaltbarer Drehrichtung, so daß die Förderbänder nach zwei Richtungen bewegbar sind. Darüberhinaus sind diese beiden Horizontalförderer 10 in ihrer Achsrichtung verschiebbar (Pfeil 12 - Fig. 3). In Fig. 1 sind die zu beiden Seiten des Schrägförderers liegenden Horizontalförderer 10 in ihren beiden Endlagen eingezeichnet. Diese Horizontalförderer 10 liegen unterhalb der Abwurfkante 9 des schrägen Förderbandes 8 und ferner parallel zu einer die Transportrichtung (Pfeil 13) der Abbauvorrichtung 22 enthaltenden Vertikalebene E. Unter Transportrichtung (Pfeil 13) wird hier und im folgenden jene Richtung verstanden, die parallel zur Längserstreckung des Kompostierfeldes 3 liegt, also in Fig. 3 in der Zeichenebene. Es ist also jene Transportrichtung, die der Schrägförderer, das schräg geneigte Förderband 8 ausübt. Zwischen der Abwurfkante 9 der Abbauvorrichtung 22 und den beiden seitlich davon liegenden Horizontalförderern 10 befindet sich ein V-förmiger Schüttkanal 14 (Fig. 4 und Fig. 5) mit einer satteldachartigen Leitvorrichtung 15, die die Begrenzungswände 16 dieses Schüttkanales 14 bildet. Diese die Leitvorrichtung 15 bildenden Begrenzungswände 16 sind um Achsen 17 schwenkbar, deren Horizontalabstand voneinander größer ist als die Breite W der Abwurfkante 9. Die Achsen 17 liegen an der der Firstkante 18 abgewandten Seite der Leitvorrichtung 15. Ferner sind diese beiden Achsen 17 horizontal angeordnet und liegen parallel zu der die Transportrichtung (Pfeil 13) der Abbauvorrichtung 22 enthaltenden Vertikalebene E. Die beiden Horizontalförderer 10 können entweder synchron in Richtung des Pfeiles 12 verschoben werden oder auch in der Weise, daß jeder Horizontalförderer 10 für sich unabhängig vom anderen und gegebenenfalls in entgegengesetzte Seiten verschiebbar ist.

In Fig. 3 soll der mit durchgezogenen Linien dargestellte Horizontalförderer 10 und der mit strichpunktierter Linie dargestellte Horizontalförderer die jeweiligen Endlagen darstellen. Die jeweilige Transportrichtung ist mit den Pfeilen 19 angedeutet. Daraus ist erkennbar, daß die Umsetzweiten W1 bzw. W2 die Grenzen markieren, innerhalb welcher die Altmiete 20 zur Neumiete 21 umgesetzt werden kann.

Die vorstehend beschriebene Einrichtung erlaubt zwei Arbeitsweisen: Die eine Arbeitsweise ist in Fig. 4 dargestellt. Die beiden Begrenzungswände 16 des Schüttkanales 14 sind zur Bildung der satteldachartigen Leitvorrichtung 15 gegeneinander geschwenkt, ihre Firstkante 18 liegt in der die Transportrichtung der Abbauvorrichtung 22 enthaltenden, mittleren Vertikalebene E. Das von den Grab- und Förderrädern 7 aufgenommene und vom Schrägförderer 8 hochgeführte Gut fällt über die Abwurfkante 9 in den V-förmigen Schüttkanal 14 und wird hier durch die Leitvorrichtung 15 geteilt, und die so gewonnenen beiden Gutströme fallen auf die seitlich angeordneten Horizontalförderer 10, die nun für den Austrag sorgen, wobei die jeweilige Umsetzweite von der Lage dieser Horizontalförderer 10 gegenüber der Abwurfkante 9 und ihrer jeweiligen Drehrichtung abhängt.

Bei der anderen Arbeitsweise sind die Begrenzungswände 16 hochgeklappt (Fig. 5), so daß das über die Abwurfkante 9 gelangende Gut ungehindert nach unten fällt.

Zum Umsetzen der Altmiete 20 zur Neumiete 21 bewegt sich die Abbauvorrichtung 22 nicht nur in Längsrichtung des Kompostierfeldes 3, sondern auch quer dazu (Pfeil 11 in Fig. 1).

Im gezeigten Ausführungsbeispiel besitzt die Abbauvorrichtung 22 paarweise angeordnete Grab- und Förderräder 7, wie sie zum Stand der Technik gehören. Es liegt im Rahmen der Erfindung, hier auch andere Grab- und Fördereinrichtungen vorzusehen, beispielsweise solche, die in der vertikalen Mittelebene des Schrägförderers 8 angeordnet sind, so daß das umzuschichtende Gut nicht von der Seite her auf den Schrägförderer 8 aufgebracht wird, sondern von der rückseitigen Stirnseite her aufgeladen wird. Der Schrägförderer, der hier als Förderband 8 ausgebildet ist, kann ebenfalls verschiedene Ausgestaltungen haben, wobei hier alle jene Mittel einzubeziehen sind, die es ermöglichen, das schüttfähige und umzuschichtende Gut aufzunehmen und nach oben zu transportieren, um so ein Umschichten zu erreichen.

Obwohl beim gezeigten Ausführungsbeispiel das umzuschichtende Gut von der Seite her auf den Schrägförderer 8 geladen wird, geschieht das Umsetzen ohne seitlichen Versatz des Gutes, da die zu beiden Seiten des Schrägförderers 8 liegenden Horizontalförderer 10 jeweils mit den Grab- und Förderrädern 7 in oder nahe derselben Vertikalebene liegen.

Beim gezeigten Ausführungsbeispiel sind die Achsen 17, um welche die Begrenzungswände 16 schwenkbar sind, am unteren Teil des Schüttkanales 14 vorgesehen. Grundsätzlich wäre es möglich, die Firstkante 18 der Leitvorrichtung 15 gleichzeitig als Schwenkachse auszubilden. Um in der Weise arbeiten zu können, wie in Fig. 5 dargestellt, wären dann diese beiden Begrenzungswände 16 zusammenzuklappen, wobei dann innerhalb des Abwurfsbereiches die zusammengeklappten Begrenzungswände 16 liegen, die jedoch keine erhebliche und nennenswerte Querschnittsverengung darstellen.

### Legende zu den Hinweisziffern:

- 1: Längsseite
- 2: Längsseite
- 3: Kompostierfeld
- 4: Kranbahn
- 5: Kranbrücke
- 6: Laufwagen
- 7: Grab- und Förderrad
- 8: Schrägförderer - Förderband
- 9: Abwurfkante
- 10: Horizontalförderer
- 11: Pfeil
- 12: Pfeil
- 13: Pfeil
- 14: Schüttkanal
- 15: Leitvorrichtung
- 16: Begrenzungswand
- 17: Achse
- 18: Firstkante
- 19: Pfeil
- 20: Altmiete
- 21: Neumiete
- 22: Abbauvorrichtung

## Patentansprüche

1. Einrichtung zum Umsetzen von auf einem Kompostierfeld (3) gelagertem, verrottbarem Gut zur Kompostierung mit einer längs und quer zum Kompostierfeld (3) verfahrbaren, das umzusetzende Gut aufnehmenden und zumindest in Längsrichtung des Kompostierfeldes (3) transportierenden Abbauvorrichtung (22) mit einer Abwurfkante (9), wobei im Bereich dieser Abwurfkante (9) und unterhalb derselben mindestens zwei parallel zu einer die Transportrichtung der Abbauvorrichtung (22) enthaltenden Vertikalebene angeordnete Horizontalförderer (10), insbesondere Förderbänder vorgesehen sind, die in Richtung ihrer Längsachse verschiebbar gelagert sind, dadurch gekennzeichnet, daß die beiden Horizontalförderer (10) mit Abstand nebeneinander angeordnet sind und zwischen diesen beiden Horizontalförderern (10) die Abwurfkante (9) liegt und unterhalb der Abwurfkante (9) eine satteldachartige Leitvorrichtung (15) angeordnet ist, durch die das über die Abwurfkante (9) abfallende Gut teilbar und den Horizontalförderern (10) zuleitbar ist.

2. Einrichtung nach Anspruch 1, dadurch gekennzeichnet, daß die Firstkante (18) der satteldachartigen Leitvorrichtung (15) in der die Transportrichtung der Abbauvorrichtung (22) enthaltenden mittleren Vertikalebene (E) liegt.

3. Einrichtung nach Anspruch 1 oder 2, dadurch gekennzeichnet, daß die satteldachartige Leitvorrichtung (15) Teil eines V-förmigen Schüttkanales (14) ist und Begrenzungswände (16) desselben bildet.

4. Einrichtung nach Anspruch 3, dadurch gekennzeichnet, daß die beiden die satteldachartige Leitvorrichtung (15) bildenden Begrenzungswände (16) des Schüttkanales (14) um zu der die Transportrichtung der Abbauvorrichtung (22) enthaltenden Vertikalebene (E) parallele und im wesentlichen horizontale Achsen (17) schwenkbar sind und diese Achsen (17) an den der Firstkante (18) abgewandten Seite der V-förmigen Leitvorrichtung (15) liegen.

5. Einrichtung nach Anspruch 4, dadurch gekennzeichnet, daß der horizontale Abstand der Achsen (17) mindestens so groß ist wie die Breite (W) der Abwurfkante (9).

6. Einrichtung nach Anspruch 1, dadurch gekennzeichnet, daß die beiden längsverschiebbaren Horizontalförderer (10) hinsichtlich ihrer Förderrichtung reversibel sind.

7. Einrichtung nach Anspruch 1 und 6, dadurch gekennzeichnet, daß die beiden längsverschiebbaren Horizontalförderer (10) synchron in ihrer Längsrichtung verschiebbar sind.

8. Einrichtung nach Anspruch 1 und 6, dadurch gekennzeichnet, daß die beiden Horizontalförderer (10) unabhängig voneinander und gegebenenfalls in unterschiedlichen Richtungen längsverschiebbar sind.

9. Einrichtung nach Anspruch 1, dadurch gekennzeichnet, daß die Horizontalförderer (10) an einem die Abbauvorrichtung (22) tragenden Laufwagen (6) gelagert sind, der seinerseits entlang einer das Kompostierfeld (3) überspannenden Kranbrücke (5) verfahrbar ist.

## Claims

1. An arrangement for shifting rottable material for compost-making stored on a composting field (3), having an excavating device (22) which has a discharge edge (9), is movable longitudinally and transversely to the composting field (3) and receives the material to be shifted and transports it at least in the longitudinal direction of the composting field (3), at least two horizontal conveyors (10), in particular conveyor belts, which are arranged parallel to a vertical plane containing the transport direction of the excavating device (22) being provided in the region of this discharge edge (9) and below the latter, which horizontal conveyors (10) are mounted so as to be displaceable in the direction of their longitudinal axis, characterised in that the two horizontal conveyors (10) are arranged beside one another at a distance apart and the discharge edge (9) lies between these two horizontal conveyors (10) and a gabled-roof-like guide device (15) is arranged below the discharge edge (9), the material falling off via the discharge edge (9) being able to be divided and fed to the horizontal conveyors (10) through this guide device (15).

2. An arrangement according to Claim 1, characterised in that the ridge edge (18) of the gabled-roof-like guide device (15) lies in the central vertical plane (E) containing the transport direction of the excavating device (22).

3. An arrangement according to Claim I or 2, characterised in that the gabled-roof-like guide device (15) is part of a V-shaped delivery channel (14) and forms boundary walls (16) thereof.

4. An arrangement according to Claim 3, characterised in that the two boundary walls (16), of the delivery channel (14), forming the gabled-roof-like guide device (15) are pivotable about axes (17) which are parallel to the vertical plane (E) containing the transport direction of the excavating device (22) and which are substantially horizontal, and these axes (17) are at that side of the V-shaped guide device (15) which faces away from the ridge edge (18).

5. An arrangement according to Claim 4, characterised in that the horizontal spacing of the axes (17) is at least as great as the width (W) of the discharge edge (9).

6. An arrangement according to Claim 1, characterised in that the two longitudinally-displaceable horizontal conveyors (10) are reversible with respect to their conveying direction.

7. An arrangement according to Claims 1 and 6, characterised in that the two longitudinally-displaceable horizontal conveyers (10) are displaceable synchronously in their longitudinal direction.

8. An arrangement according to Claims 1 and 6, characterised in that the two horizontal conveyors (10) are longitudinally displaceable independently of one another and optionally in different directions.

9. An arrangement according to Claim 1, characterised in that the horizontal conveyors (10) are mounted on a bogie wagon (6) which bears the excavating device (22) and which for its part is movable along a crane bridge (5) spanning the composting field (3).

## Revendications

1. Dispositif pour déplacer un produit putrescible déposé sur une aire de compostage (3) afin qu'il se transforme en compost, dans lequel un dispositif d'abattage (22), mobile en long et en travers par rapport à l'aire de compostage (3) recueille le produit à déplacer et le transporte au moins suivant la direction longitudinale de l'aire de compostage (3), ce dispositif présentant un bord de déchargement (9) dans la zone duquel et en dessous duquel sont prévus au moins deux transporteurs horizontaux (10) situés dans des plans parallèles à un plan vertical contenant la direction de transport du dispositif d'abattage (22), ces transporteurs étant de préférence des bandes transporteuses dont chacune peut coulisser suivant la direction de son axe longitudinal,
caractérisé en ce que
les deux transporteurs horizontaux (10) sont disposés côte à côte à un certain intervalle et, entre eux, se trouve le bord de déchargement (9) au dessous duquel est placé un dispositif de guidage (15) en forme de selle permettant de diviser le produit tombant du bord de déchargement (9) et de l'amener aux transporteurs horizontaux (10).

2. Dispositif selon la revendication 1,
caractérisé en ce que
le bord (18) formant le faîte du dispositif de guidage (15) est situé dans le plan vertical médian (E) où se trouve le dispositif de transport du dispositif d'abattage (22).

3. Dispositif selon la revendication 1 ou 2,
caractérisé en ce que
le dispositif de guidage (15) est une partie d'un canal (14) en forme de V servant de passage au produit en vrac, et constitue des parois (16) délimitant ce canal.

4. Dispositif selon la revendication 3,
caractérisé en ce que
les deux parois (16) du canal (14) qui constituent le dispositif de guidage (15) peuvent basculer autour d'axes essentiellement horizontaux (17), parallèles au plan vertical (E) contenant la direction de transport du dispositif d'abattage (22), ces axes (17) se trouvant le long des côtés du dispositif de guidage (15) en forme de V, qui sont éloignés du bord de faîte (18).

5. Dispositif selon la revendication 4,
caractérisé en ce que
la distance horizontale entre les axes (17) est au moins égale à la largeur (W) du bord de déchargement (9).

6. Dispositif selon la revendication 1,
caractérisé en ce que
les deux transporteurs horizontaux (10) pouvant coulisser suivant leurs directions longitudinales, sont réversibles en ce qui concerne leur sens de transport.

7. Dispositif selon l'une des revendications 1 et 6,
caractérisé en ce que
les deux transporteurs horizontaux (10) peuvent coulisser en synchronisme selon leurs directions longitudinales.

8. Dispositif selon l'une des revendications 1 et 6,
caractérisé en ce que les deux transporteurs horizontaux (10) peuvent coulisser longitudinalement indépendamment l'un de l'autre et, le cas échéant, dans des sens opposés.

9. Dispositif selon la revendication 1,
caractérisé en ce que
les transporteurs horizontaux (10) sont montés sur un chariot (6) qui porte le dispositif d'abattage (22) et qui, de son côté, peut se déplacer le long d'un portique de grue (5) enjambant l'aire de compostage (3).
